# EUROPÄISCHE PATENTANMELDUNG

(11) **EP 0 945 285 A2**
(43) Veröffentlichungstag der Anmeldung: **29.09.1999**
(21) Anmeldenummer: 99104528.7
(22) Anmeldetag: 06.03.1999
(51) Int. Cl.: B60C 15/06, B60C 15/04

(54) **Luftreifen mit einem Kernprofil**

(30) Priorität: 26.03.1998 DE 19813385
(71) Anmelder: Continental Aktiengesellschaft, 30165 Hannover (DE)
(72) Erfinder: Frerichs, Udo, 30855 Langenhagen (DE)

(57) **Zusammenfassung**

Zwecks Schaffung eines Luftreifens mit hinreichenden Notlaufeigenschaften befaßt sich die Erfindung mit der Weiterentwicklung eines Kernprofils (2) im Bereich des Wulstes (8).

Das Kernprofil (2), das von einem Wulst (8) eines Luftreifens in radialer Richtung ausgeht und einen rotationssymmetrischen Keil mit spitzem Querschnitt ("Apex"-Profil) bilet, enthält einen durchgehenden Festigkeitsträger (4), der aus Metall- oder Kunststoff-Filamenten besteht, die allseitig von Gummi (6) umgeben sind.
Die Filamente des Festigkeitsträgers (4) erstrecken sich vorwiegend in radialer Richtung.
Mehrere Festigkeitsträger-Lagen (4) sind voneinander beabstandet angeordnet und enden abgestuft zueinander.

Mit Hilfe des erfindungsgemäßen Kernprofils (2) ergibt sich eine (teilweise) selbsttragende Karkasse im Hinblick auf begrenzte Pannenlauffähigkeit des Luftreifens.

## Beschreibung

Bei der vorliegenden Erfindung wird von einem Luftreifen ausgegangen. Insbesondere befaßt sich die Erfindung mit der Weiterentwicklung eines Kernprofils im Bereich des Wulstes eines Luftreifens, gemäß dem Oberbegriff des Anspruchs 1.

Ein herkömmlicher Luftreifen umfaßt in der Regel ein Paar in einem axialen Abstand voneinander angeordnete Wülste. In radialer Richtung schließt sich diesen Wülsten jeweils ein Kernprofil an. Außerdem erstreckt sich üblicherweise in radialer Richtung von jedem Wulst eine Karkaßlage, die sich an ihrem größten Radius zur jeweils anderen Seite hin wölbt und so eine Einheit mit der von dem jeweils gegenüberliegenden Wulst ausgehenden Karkaßlage bildet. Die freien Enden der gesamten Karkaßlage sind zur Sicherung um die Wulstkerne geschlungen. Auf dem äußeren Umfang des Reifens ist ein Gürtel und der Laufstreifen angeordnet. Wulstkern und Kernprofil sind häufig von einer Kernfahne umhüllt.

Die Fortentwicklung von Luftreifen ist von verschiedenen Zielkonflikten begleitet.
Ein wichtiges Anliegen der Automobilindustrie, der Autofahrer und auch der staatlichen Gesetzgebung besteht in einer Reduktion des Treibstoffverbrauchs der Fahrzeuge.

Bezüglich der Reifen kann der Treibstoffverbrauch durch Verringerung des Rollwiderstandes reduziert werden. Durch einen härteren Unterbau des Laufstreifens kann die Walkarbeit verringert werden. Gummimischungen mit geringerer Hysterese verringern die Verluste bei der Verformung der Reifenflanken. Durch Anbringung diverser Wulstprofile wird der Reifen härter.
Durch einen derartig vielschichtigen Aufbau kann die Verformungsarbeit zwar insgesamt reduziert werden, andererseits leidet aber der Fahrkomfort unter derartigen Maßnahmen. Auch vergrößert sich der Materialeinsatz und der Herstellungsaufwand.

Der hier interessierende Zielkonflikt besteht in der Realisierung von Notlaufeigenschaften im Fall eines nicht ausreichend mit Luft beaufschlagten Reifens (insbesondere im Fall eines "Plattfußes"), einerseits, und Fahrkomfort, andererseits. Mit großer Flexibilität der Reifenflanke ist ein hoher Fahrkomfort insbesondere bei Geradeausfahrt gegeben. In Anbetracht dieses Vorteils sind die diesbezüglichen Nachteile, insbesondere eine verschlechterte Notlaufeigenschaft, entweder übersehen oder billigend in Kauf genommen.

Durch den Trend zu immer höheren Geschwindigkeiten sollte die Forderung nach hinreichenden Notlaufeigenschaften der verwendeten Reifen unverzichtbar sein. Und zwar sollte diese Forderung mit einem hinreichenden Maß an Fahrkomfort verknüpft werden.

Im Falle eines Druckverlustes, der meistens durch Defekte erfolgt, kann nicht nur die Wiederverwendbarkeit des Reifens sondern auch die körperliche Unversehrtheit und sogar das Leben der Fahrzeuginsassen gefährdet sein. Hier gilt es, Maßnahmen zu ergreifen, die ein kontrolliertes Anhalten des Fahrzeugs ohne lebensbedrohende Situationen ermöglichen.

Es wird versucht, die angestrebten Notlaufeigenschaften vorwiegend durch verstärkte Reifenflanken im Bereich des Kernprofils zu realisieren.

Die europäische Patentschrift 458 B1 beschreibt einen Luftreifen, dessen Kernprofil aus einer durch kurze Fasern verstärkten Kautschukmischung besteht. Diese Fasern sind in radialer Richtung zum Reifen ausgerichtet und sollen eine Dehnungsfestigkeit aufweisen. Wegen der Kürze der Fasern ist keine nennenswerte Biegesteifigkeit gegeben.

Der Luftreifen gemäß der US-Patentschrift 4.711.285 weist ebenfalls ein Kernprofil mit anisotroper Elastizität auf.
Hier sind eingearbeitete kurze Fasern in Längsrichtung orientiert.
Eine solche Faserverstarkung gewährt ebenfalls keine Biegesteifigkeit.

Auch gibt es Verstärkungen im Wulstbereich, wobei das Kernprofil von einer Kernfahne umhüllt wird.
So beschreibt z. B. die DE-PS 31 26 571 einen Luftreifen in Radialbauart, bei dem eine Zusatzschicht aus Corden hoher Elastizität an das Kernprofil angeheftet ist.
Auch hier ist durch die Zusatzschicht keine nennenswerte Erhöhung der Biegesteifigkeit gegeben.

Die EP 573 853 A1 beschreibt eine Kernfahnenstruktur eines Luftreifens, bei dem der Wulst samt Kernprofil von einer Kernfahne umhüllt ist.

Durch die kreuzweise schräge Anordnung der Kernfahnen-Verstärkung soll die Torsion des Reifens bei der Drehmomentübertragung vom Fahrzeug auf die Fahrbahn und ebenfalls der Kraftstoffverbrauch verringert werden.
Wegen der Geneigtheit der Anordnung der auf der Kernfahne angebrachten Fäden bzw. Drähte ergibt sich ebenfall keine nennenswerte Versteifung in radialer Richtung.

Die EP 238 679 beschreibt einen Luftreifen, dessen Kernprofil durch eine S-förmige Verstärkung diagonal in zwei etwa gleichgroße Hälften geteilt wird. Auch hier bleibt die Flexibilität in radialer Richtung voll erhalten.

Die Aufgabe der vorliegenden Erfindung, wie sie im wesentlichen gemaß Anspruch 1 gelost ist, besteht in der Schaffung eines Luftreifens mit hinreichenden Notlaufeigenschaften.
Vorteilhafte Weiterbildungen der Erfindung sind in den Unteransprüchen beschrieben.

Im Gegensatz zu den bekannten (Kurz-)Fasereinlagen weist das mit dem erfindungsgemäß durchgehenden Festigkeitsträger versehene Kernprofil eine beträchtlich größere Steifigkeit auf, wodurch sich eine zumindest teilweise selbsttragende Karkasse ergibt. Damit ist eine - zwar nur begrenzte - Pannenlauffähigkeit gewährleistet. In jedem Fall kann ein Fahrzeug, das mit Luftreifen ausgestattet ist, die die erfindungsgemäßen Kernprofile aufweisen, auch im drucklosen Zustand in beherrschbarer Weise zum Anhalten gebracht werden, ohne daß durch Schleudern oder sonstiges unkontrollierbares Verhalten des Fahrzeugs Gesundheit oder sogar das Leben der Fahrzeuginsassen gefährdet ist.

Neben der Verbesserung der Pannenlauffähigkeit ergibt sich mit dem erfindungsgemaß verstärkten Kernprofil auch eine Verbesserung des Handlingverhaltens im Normalbetrieb insbesondere bei Kurvenfahrt.

Die teilweise selbsttragende Wirkung des Kernprofils kann weiter verbessert werden, wenn die aus Metall- oder Kunststoff-Filamenten bestehenden Festigkeitsträger vorwiegend in radialer Richtung in die Gummimischung des Kernprofils eingearbeitet sind, woraus sich eine entsprechend anisotrope Biegesteifigkeit ergibt.

Auch durch eine rautenförmige Ausbildung der Festigkeitsträger ergibt sich eine hinreichend sebsttragende Karkasse.

Die Steifigkeit der Reifenflanke im Bereich oberhalb des Felgenhorns kann weiter verbessert werden, wenn die Filamente der Festigkeitsträger in mindestens zwei nicht zu eng beieinanderliegenden Lagen in der Gummimischung des Kernprofils angeordnet sind.

Um ein scharfes Abknicken am Ende des Kernprofils zu vermeiden, sollten - im Falle mehrerer Filamentlagen - diese zum spitzen Ende des Kernprofils hin abgestuft auslaufen.

Um auch ein Einknicken der Reifenflanke im Bereich der Wülste zu vermeiden, ist die Basis des Kernprofils im Falle eines rechteckigen Wulstquerschnitts plan und im Falle eines kreisrunden Wulstquerschnitts konkav ausgebildet.
Hierdurch ist ein optimaler Kontakt zwischen Kernprofil und Wulst gewährleistet.

Eine weitere Verbesserung der Steifigkeit der Reifenflanken im Bereich zwischen Basis des Kernprofils und Wulst ergibt sich, wenn die Filamente des Kernprofil-Festigkeitsträgers um den Wulstkern herumgeschlungen sind.

Der um den Wulstkern herumgeschlungene Kernprofil-Festigkeitsträger stellt somit auch einen Wulstverstärker dar. Durch die Integration des mit internen Festigkeitsträgern versehene Kernprofils (Apex-Profils) mit einem mit Wulstverstärker versehenen Wulst als vorgefertigtes Bauteil ergibt sich eine Verringerung der Anzahl der Bauteile an der Baumaschine mit Reduzierung der Toleranz- und Staffelungsprobleme.

Ein in radialer Richtung bis in den Bereich des Gürtels ragendes Kernprofil (Apexprofil) stellt eine weitere Maßnahme in Richtung auf den Pannenlauffall dar.

Die einzelnen Merkmale des Erfindungsgegenstandes werden anhand der beigefügten Zeichnungen näher erläutert.
Fig. 1 zeigt ein Segment eines erfindungsgemäßen Kernprofils in perspektivischer Ansicht;
Fig. 2 bis Fig. 9 zeigen Querschnitte verschiedener erfindungsgemäßer Kernprofile;
Fig. 10 und Fig. 11 zeigen Standardkernprofile im Schnitt, jeweils ohne Verstärkungseinlage(n).

Die in den Abbildungen dargestellten Kernprofile 2 stellen sogenannte "Apex"-Profile dar. Ein Apex-Profil ist ein Profil, das mit seinem einen Ende stumpf an den Wulst(kern) 8 angrenzt, während das andere Ende, das sogenannte Apex-Profil, in radialer Richtung mehr oder weniger spitz ausläuft. Insbesondere schlank auslaufende Kernprofile werden "Apex"-Profile genannt. Sowohl herkömmliche niedrige Kernprofile (Fig. 10) als auch herkömmliche hohe Kernprofile ("Apex", Fig. 11) weisen keine internen Verstärkungseinlagen auf sondern werden lediglich durch eine extern anzubringende Kernfahne oder durch eine Karkaßlage gestützt.

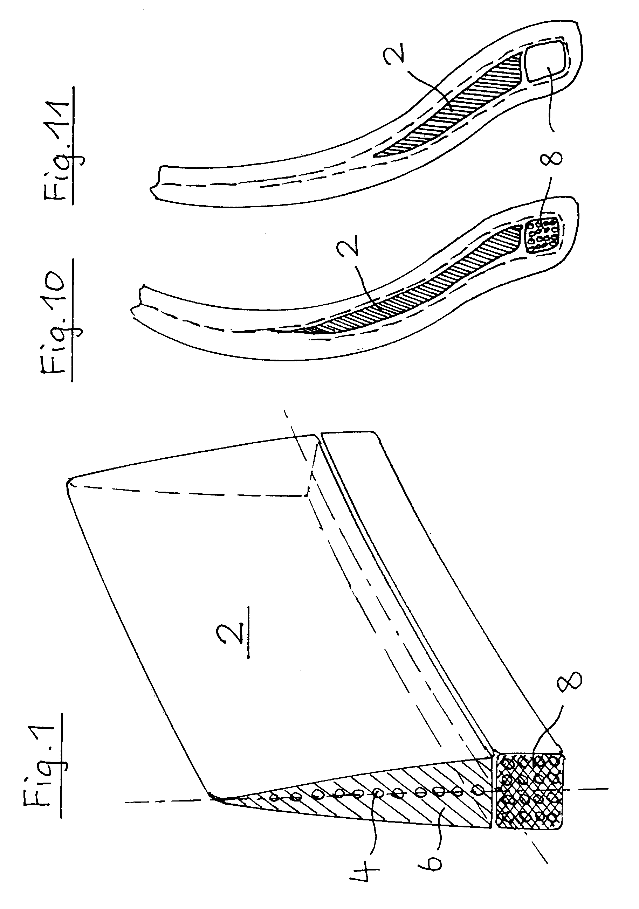

Das in Fig. 1 in perspektivischer Ansicht dargestellte Kernprofil 2 besteht aus einem Festigkeitsträger 4 in Form eines Gewebes, welches allseitig von Gummi 6 umgeben ist.

Das Kernprofil 2 ist keilförmig ausgebildet und erstreckt sich von dem jeweiligen Reifenwulst 8 ausgehend in radialer Richtung, wo es - sich verjüngend - mit spitzem Querschnitt ausläuft.
Der dargestellte Reifenwulst 8 ist ein sogenannter Piercekern, der radial von der Verstärkungseinlage 4 durchzogen ist.
Der Festigkeitsträger 4 wird in dem dargestellten Ausführungsbeispiel aus einem Kreuzgewebe gebildet, welches radial unter einem Winkel von 30 bis 45° mittig im Kernprofil angeordnet ist und aus Stahlcord oder einem steifen Kunststoff besteht.

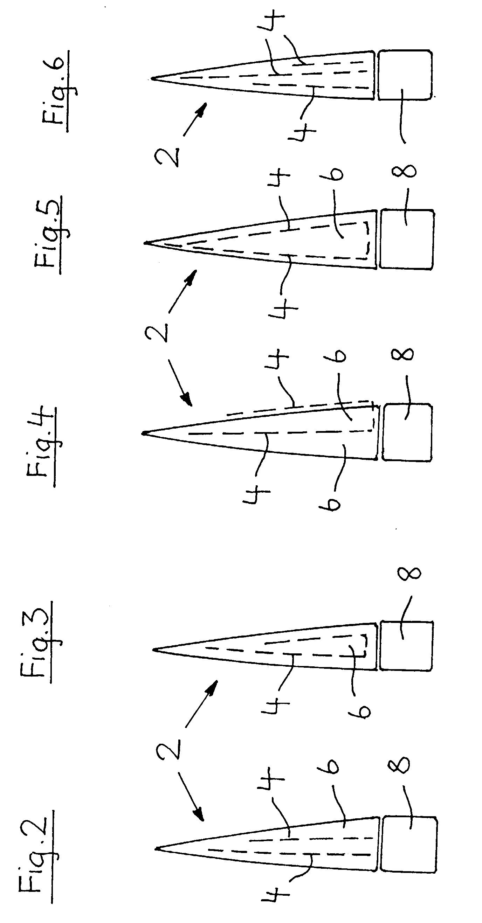

Das in Fig. 2 dargestellte Kernprofil 2 weist zwei Lagen von Festigkeitsträgern 4 auf. Dabei sind die beiden Festigkeitsträgerlagen 4 voneinander beabstandet und unterschiedlich lang. so daß sich in Richtung auf die Profilspitze eine Abstufung bezüglich der Festigkeitsträgerenden ergibt.

Die Richtung der Cordeinlage kann 0° (radial) oder ±30 bis ±45° bezogen auf den Radradius sein.

Während der in Fig. 2 dargestellte Festigkeitsträger 4 aus zwei einzelnen Lagen besteht, sind die in Fig. 3 und Fig. 4 dargestellten Versionen jeweils aus einer einzigen umgeschlagenen Festigkeitsträgerlage 4 - gefaltet und gestuft - gebildet.

Während gemäß Fig. 3 der Festigkeitsträger 4 vollständig im Kernprofil 2 eingebettet ist, ist gemäß Fig. 4 eine Hälfte innerhalb des Kernprofils 2 angeordnet, während die andere Hälfte des Festigkeitsträgers 4 an einer Außenseite des Kernprofils 2 anliegt.

Die in Fig. 5 dargestellte Kernprofil/Reifenwulst-Anordnung entspricht dem in Fig. 3 dargestellten Beispiel.
Die Fig. 5 soll verdeutlichen, daß die in dem Kernprofil 2 angeordneten Festigkeitsträgerlagen 4 einen möglichst großen Abstand voneinander aufweisen sollen.
Dies ist insbesondere bei breiten Kernen und bei Kernen mit breiten "Profilfüßen" zu realisieren.

Das in Fig. 6 dargestellte Kernprofil weist insgesamt drei Festigkeitsträgerlagen 4 auf. In Richtung auf die Spitze enden diese drei Festigkeitsträgerlagen 4 abgestuft.

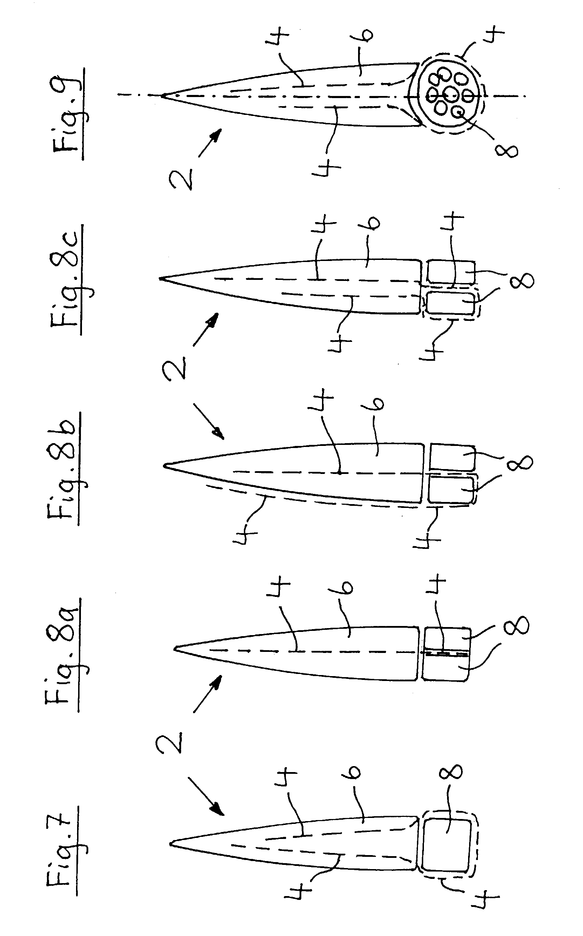

Die Fig. 7 zeigt die Zuordnung eines erfindungsgemäßen Kernprofils 2 zu einem Wulst 8. Der Wulst(kern) 8 weist einen quadratischen Querschnitt auf. Das Kernprofil 2 hat eine plane Stirnfläche, die unmittelbar an den Wulstkern 8 angrenzt. Die zugehörige Festigkeitsträgerlage 4 umschlingt in diesem Ausführungsbeispiel den Wulstkern. Ansonsten ähnelt die in Fig. 7 dargestellte Version der in Fig. 5 dargestellten Ausführungsform: Die beiden Enden des Festigkeitsträgers 4 enden abgestuft in dem zugeordneten Kernprofil 2.

Die Figuren 8a, 8b und 8c zeigen Varianten, bei denen die Festigkeitsträgerlage 4 jeweils durch den Wulstkern 8 hindurchgeführt ist: in Fig. 8 mit einfacher Festigkeitsträgerlage 4, entsprechend Fig. 1, in Fig. 8b mit nach außen umgeschlagener Festigkeitsträgerlage 4, ähnlich Fig. 4, und in Fig. 8c mit außen um den halben Wulstkern 8 geschlungenen Festigkeitsträger 4, wobei die beiden Enden des Festigkeitsträgers 4 innerhalb des Kernprofils 2, ähnlich Fig. 5, enden.

Die Fig. 9 zeigt einen - dem in Fig. 7 dargestellten - vergleichbaren Aufbau für einen Kabelkern:
Hierbei handelt es sich um einen Wulstkern 8 mit kreisrundem Querschnitt, der von einem erfindungsgemäßen Kernprofil 2 mit konkaver Grundfläche berührt wird. Auch in dieser Ausführungsform umschlingt die Festigkeitsträgerlage 4 den Wulstkern 8, während die beiden Enden unterschiedlich lang, d. h. abgestuft, in das Kernprofil 2 hineinragen.
Varianten gemäß Fig. 2 bis Fig. 6 sind hier ebenfalls denkbar.

### Bezugszeichenliste

- 2: Kernprofil, Apexprofil
- 4: Festigkeitsträger(lage)
- 6: Gummi
- 8: Wulst(kern)

## Patentansprüche

1. Luftreifen mit einem Kernprofil (2),
das von einem Wulst (8) des Luftreifens in radialer Richtung ausgeht und einen rorationssymmetrischen Keil mit spitzem Querschnitt ("Apex-Profil") bildet,
**dadurch gekennzeichnet,**
daß das Kernprofil (2) einen durchgehenden Festigkeitsträger (4) enthält,
der aus Metall- oder Kunststoff-Filamenten besteht, die allseitig von Gummi (6) umgeben sind.

2. Luftreifen nach Anspruch 1,
**dadurch gekennzeichnet,**
daß sich die Filamente des Kernprofil-Festigkeitsträgers (4) vorwiegend in radialer Richtung erstrecken.

3. Luftreifen nach Anspruch 1,
**dadurch gekennzeichnet,**
daß die Filamente rautenförmig angeordnet sind.

4. Luftreifen nach einem der Ansprüche 1 bis 3,
**dadurch gekennzeichnet,**
daß der Festigkeitsträger (4) in mindestens zwei voneinander beabstandeten Lagen angeordnet ist.

5. Luftreifen nach Anspruch 4,
**dadurch gekennzeichnet,**
daß die Festigkeitsträger-Lagen (4) zueinander abgestuft enden.

6. Luftreifen nach einem der vorherigen Ansprüche,
**dadurch gekennzeichnet,**
daß die Basis des Kernprofils (2) im Falle eines rechteckigen Wulstquerschnitts plan und
im Falle eines kreisrunden oder polygonalen Wulstquerschnitts konkav ausgebildet ist.

7. Luftreifen nach Anspruch 6,
**dadurch gekennzeichnet,**
daß die Filamente des Kernprofil-Festigkeitsträgers (4) um den Wulstkern (8) oder um einen Teil des Wulstkerns (8) herumgeschlungen sind.

8. Luftreifen nach einem der Ansprüche 1 bis 7,
**dadurch gekennzeichnet,**
daß das Apexprofil (2) in radialer Richtung bis in den Bereich des Gürtels reicht.
